# EUROPÄISCHE PATENTSCHRIFT

(11) **EP 2 678 576 B1**
(45) Veröffentlichungstag und Bekanntmachung des Hinweises auf die Patenterteilung: **17.06.2015**
(21) Anmeldenummer: 11788906.3
(22) Anmeldetag: 02.12.2011
(51) Int. Cl.: F16C 33/54

(54) **WÄLZKÖRPERKÄFIG**
ROLLING ELEMENT CAGE
CAGE DE CORPS DE ROULEMENT

(30) Priorität: 24.02.2011 DE 102011004687
(43) Veröffentlichungstag der Anmeldung: 01.01.2014
(73) Patentinhaber: Schaeffler Technologies AG & Co. KG, 91074 Herzogenaurach (DE)
(72) Erfinder: FRIEDRICH, Peter, 91757 Auernheim (DE); KRÜGER, Michael, 97422 Schweinfurt (DE); SÄBSCH, Steffen, 91085 Weisendorf (DE); SCHÄFERS, Heinz, 91056 Erlangen (DE); FICK, Matthias, 91220 Schnaittach (DE); WINKLER, Manfred, 91086 Aurachtal (DE); ENDERS, Johannes, 91074 Herzogenaurach (DE)
(86) Internationale Anmeldenummer: PCT/EP2011/071648
(87) Internationale Veröffentlichungsnummer: WO 2012/113472

(56) Entgegenhaltungen:
- DE-A1- 1 675 083

## Beschreibung

### Gebiet der Erfindung

Die Erfindung betrifft einen Wälzkörperkäfig aus einem profilierten, gestanzten, abgelängten und rundgebogenen Metallbandmaterial, wobei die Enden der abgelängten Bandabschnitte durch Schweißen miteinander verbunden sind.

### Hintergrund der Erfindung

Um bei derartigen Wälzkörperkäfigen Unsymmetrien und dadurch verursachte Unwuchten sowie scharfkantige Vorsprünge zu vermeiden, die sich an den jeweiligen Gegenlaufpartner des Käfigs, beispielsweise einen Lageräußenring anlegen könnten, werden die Wälzkörperkäfige so gefertigt, dass die Bandabschnittsenden möglichst ohne jeden axialen oder radialen Versatz miteinander verbunden sind, d.h. die Käfige sind rotationssymmetrisch sowie radial und axial glatt. Man bedient sich dazu beispielsweise eines Dorns (oder gemäß der DE 10 2007 044 946 A1 des Kurbelzapfens, der das Wälzlager aufnehmen soll), auf den der gebogene Bandabschnitt so aufgelegt wird, dass die Bandabschnittsenden bündig aneinander liegen, und auf welchem diese versatzfrei verschweißt werden.

Solange sich in der Vergangenheit Wälzkörperkäfige zumindest nicht radial und axial vollkommen glatt herstellen ließen, wurde dafür Sorge getragen, dass die Schweißnahtbereiche nicht unmittelbar mit zugeordneten Gegenlaufkörpern in Verbindung kommen konnten. So zeigt die DE 16 75 083 A1 einen Käfig für ein Radialnadel- oder Radialrollenlager der im Oberbegriff des Anspruchs 1 genannten Art, bei welchem die miteinander durch Verschweißen verbundenen Enden der Ränder (Borde) ihrerseits radial in einem der Versetzung der Ränder entgegengesetzten Sinn radial versetzt sind, so dass auf einer der Käfigseiten die Schweißnaht von der entsprechenden zylindrischen Fläche radial zurücktritt. Durch diese Ausgestaltung des Käfigs wird erreicht, dass nur ungestörte Bereiche die Zentrierung des Käfigs auf der angrenzenden Rollbahn gewährleisten, ohne dass die Schweißnaht in Berührung mit der Rollbahn gelangen kann.

Es hat sich jedoch gezeigt, dass sich bei einer symmetrischen und glatten Ausgestaltung des Käfigs in vielen Fällen eine unvorteilhafte Schmierölverteilung einstellt, die auch in keiner Weise beeinflussbar ist. Insbesondere bei Lagern mit einer Ölmangelschmierung und langsamen Drehbewegungen ist bei manchen technischen Anwendungen eine andere als die sich aktuell einstellende Ölverteilung im Lager erwünscht. Bei Lagern mit Fettschmierung insbesondere dann, wenn sie sehr selten laufen, kann es vorkommen, dass das Fett mit der Zeit aus dem Wälzkontakt gedrückt wird und auch im Einsatz nicht mehr in ausreichender Menge in den Wälzkontakt zurückgelangt, was zu einem frühen Lagerschaden führen kann.

Außerdem sind durch absolut rotationssymmetrische Wälzkörperkäfige deren Schwingungsverhalten und damit dessen Einfluss auf das Schwingungsverhalten des Gesamtsystems festgelegt, was in manchen Fällen zu nicht optimalen Systemeigenschaften führt.

### Aufgabe der Erfindung

Der Erfindung liegt die Aufgabe zugrunde, einen Wälzkörperkäfig der im Oberbegriff des Anspruchs 1 genannten Art zu schaffen, welcher die Möglichkeit bietet, die Schmieröl- bzw. Schmierfettverteilung im Lager und auch dessen Schwingungsverhalten gezielt zu beeinflussen.

### Zusammenfassung der Erfindung

Der Erfindung liegt die Erkenntnis zugrunde, dass es bei von Standardbetriebsbedingungen abweichenden Betriebsbedingungen von Nutzen sein kann, die an sich angestrebte rotationssymmetrische Ausbildung von Wälzkörperkäfigen aufzugeben bzw. im Sinne einer gezielten Unsymmetrie zu verändern, um Einfluss auf die Schmiermittelverteilung und/oder das Schwingungsverhalten eines Lagers zu nehmen.

Die Erfindung geht daher aus von einem Wälzkörperkäfig aus einem profilierten, gestanzten, abgelängten und rundgebogenen Metallbandmaterial, wobei die Enden der abgelängten Bandabschnitte durch Schweißen miteinander verbunden sind. Dabei ist erfindungsgemäß vorgesehen, dass die an der Peripherie des Käfigs liegenden Bandabschnittsenden einen vorgegebenen axialen und/oder radialen Versatz zueinander aufweisen. Da ein derartiger Versatz im Zuge des ohnehin erforderlichen Fertigungsschrrttes des Schweißens hergestellt werden kann, kann gemäß der Erfindung der oben beschriebene erwünschte Effekt ohne einen etwaigen zusätzlichen Fertigungsschritt erreicht werden.

Bei einem Lager mit Ölmangelschmierung und langsamen Drehbewegungen kann durch diese Käfiggeometrie gezielt eine andere Ölverteilung im Lager erreicht werden. Bei einem durch Wälzkörper geführten Käfig mit radialem Versatz der Bandabschnittsenden kann Öl je nach Drehrichtung nach radial innen oder nach radial außen gedrückt werden. Bei einem axialen Versatz der Bandabschnittsenden wird je nach Drehrichtung Öl zu der einen oder der anderen axialen Seite gedrückt bzw. "gepumpt".

Bei einem Lager mit Fettschmierung wird das Schmierfett durch die veränderte Käfiggeometrie stärker bewegt bzw. "gepumpt". Dadurch lassen sich mehr Bereiche im Lager mit Fett versorgen. Dabei wird bei einem radialen Versatz der Bandabschnittsenden das Fett je nach Drehrichtung nach radial innen oder nach radial außen gedrückt, während es bei axialem Versatz je nach Drehrichtung zu der einen oder zu der anderen Seite gedrückt wird.

Außerdem lässt sich bei Bedarf durch die unsymmetrische Ausgestaltung des Lagerkäfigs dessen Schwingungsverhalten beeinflussen, d.h. das Lager lässt sich gegenüber einem mit symmetrischem Käfig ausgestatteten Lager "verstimmen", womit das Schwingungsverhalten des Gesamtsystems, z.B. einer Maschine, eines Getriebes usw. beeinflusst werden kann. Durch den Schweißversatz werden die Wälzkörper an dieser und den benachbarten Stellen nicht gleichmäßig geführt bzw. gehalten. Dies führt bei Drehzahl zu einer unterschiedlichen Anregung der Wälzkörper und des Käfigs, wodurch sich die Frequenzen der einzelnen Komponenten im Lager unterscheiden. Somit kann beispielsweise das Geräusch von einer Frequenz auf eine andere verlagert werden bzw. der Frequenzbereich von einem engen zu einem weiteren Frequenzbereich geändert werden. Dies kann zu einer gewünschten und positiven Verstimmung des Schwingungsverhaltens des Gesamtsystems (z.B. Getriebe, Maschine usw.) führen.

Die Erfindung ist kostengünstig und schnell, d.h. durch einfachen Austausch des Lagerkäfigs umsetzbar.

Bei einer gängigen Käfigausführung mit wenigstens einem im wesentlichen rechtwinklig radial nach innen abgebogenen Bordabschnitt ist gemäß einer weiteren Ausgestaltung der Erfindung vorgesehen, dass ein axialer Versatz höchstens gleich der Hälfte der axialen Dicke des Bordabschnittes ist, so dass genügend Fläche für die gegenseitige Schweißverbindung der Bandabschnittsenden verbleibt.

Bei einem Käfig mit wenigstens einem in einer Mantelfläche des Käfigs liegenden Bordabschnitt ist in entsprechender Weise gemäß der Erfindung vorgesehen, dass ein radialer Versatz höchstens gleich der Hälfte der radialen Dicke des Bordabschnittes ist.

Eine bevorzugte Ausgestaltung der Erfindung sieht vor, dass der Käfig aus einem einzigen kreisförmig gebogenen Bandabschnitt besteht, dessen beide Enden miteinander verbunden sind. In diesem Fall gibt es am Umfang des Wälzkörperkäfigs eine Stelle, nämlich die Verbindungsstelle der Bandabschnittsenden, die aufgrund eines Versatzes der Bandabschnittsenden die oben beschriebenen Effekte bewirken kann.

Gemäß einer anderen Ausgestaltung der Erfindung besteht der Käfig aus mehreren kreissegmentförmigen Bandabschnitten, die über ihre Bandabschnittsenden zu einem kreisförmigen Käfig verbunden sind. In diesem Fall ergeben sich über den Umfang des fertigen Käfigs verteilt mehrere, der Anzahl der Bandabschnitte entsprechende Stellen, an denen die oben beschriebenen Effekte erzeugt werden. Durch die Wahl der Anzahl der zu einem kreisförmigen Käfig verbundenen Bandabschnitte lassen sich demnach die oben beschriebenen Effekte gezielt in stärkerem oder geringerem Maße erreichen.

### Kurze Beschreibung der Zeichnungen

Der erfindungsgemäß ausgebildete Wälzkörperkäfig wird nachfolgend in mehreren bevorzugten Ausführungsformen unter Bezugnahme auf die beigefügten Zeichnungen näher erläutert. Dabei zeigen:
- Figur 1: einen Querschnitt durch ein Käfigprofil gemäß dem Stand der Technik,
- Figur 2: eine Teil-Draufsicht auf einen Wälzkörperkäfig gemäß der Figur 1,
- Figur 3: eine Ansicht etwa gemäß der Figur 2, mit einem axialen Versatz der Bandabschnittsenden,
- Figur 4: einen Profilquerschnitt durch einen Wälzkörperkäfig, mit einem radialen Versatz der Bandabschnittsenden, und
- Figur 5: eine Ansicht etwa gemäß der Figur 4, mit einem radialen und einem axialen Versatz der Bandabschnittsenden.

### Detaillierte Beschreibung der Zeichnungen

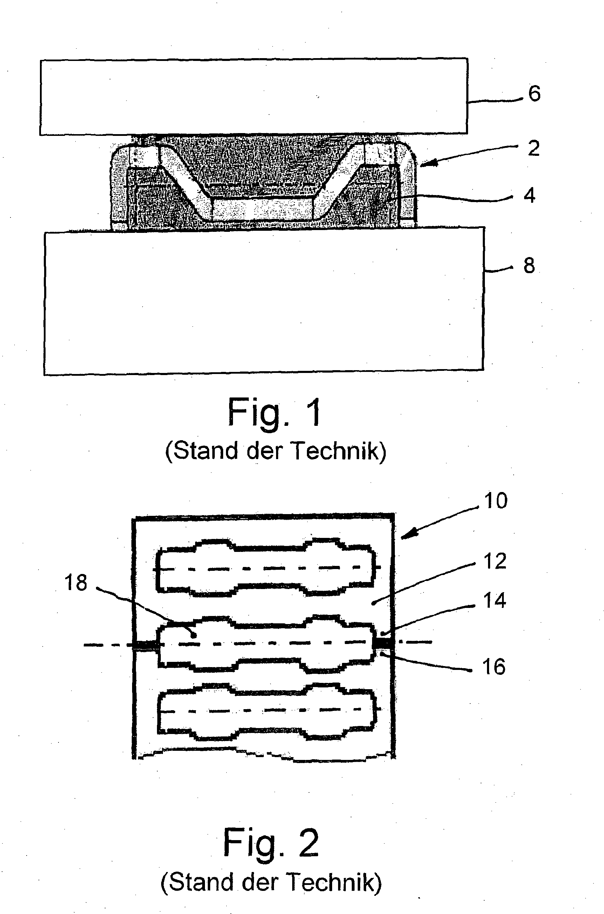

Figur 1 zeigt demnach in einem Profillängsschnitt einen herkömmlichen Wälzkörperkäfig 2, hier einen Nadelkäfig, welcher mit Wälzkörpern 4 bestückt und zwischen einem äußeren Lagerring 6 und einer Welle 8 angeordnet ist. Der Wälzkörperkäfig 2 hat im Profil etwa die Form eines M und gewährleistet in bekannter Weise eine achsparallele Führung sowie eine gegenseitige Beabstandung der Wälzkörper in Umfangsrichtung. Er selbst wird an den Gegenlaufpartnern (Lagerring 6, Welle 8) radial geführt.

Figur 2 zeigt eine Teil-Draufsicht auf einen Wälzkörperkäfig 10 etwa gemäß der Figur 1, welcher aus einem profilierten, gestanzten, abgelängten und rundgebogenen Metallbandabschnitt 12 hergestellt ist, dessen Bandabschnittsenden 14, 16 im Bereich einer ausgestanzten Wälzkörpertasche 18, d.h. also im wesentlichen die den Käfig axial begrenzenden Borde ohne Versatz durch Schweißen miteinander verbunden sind.

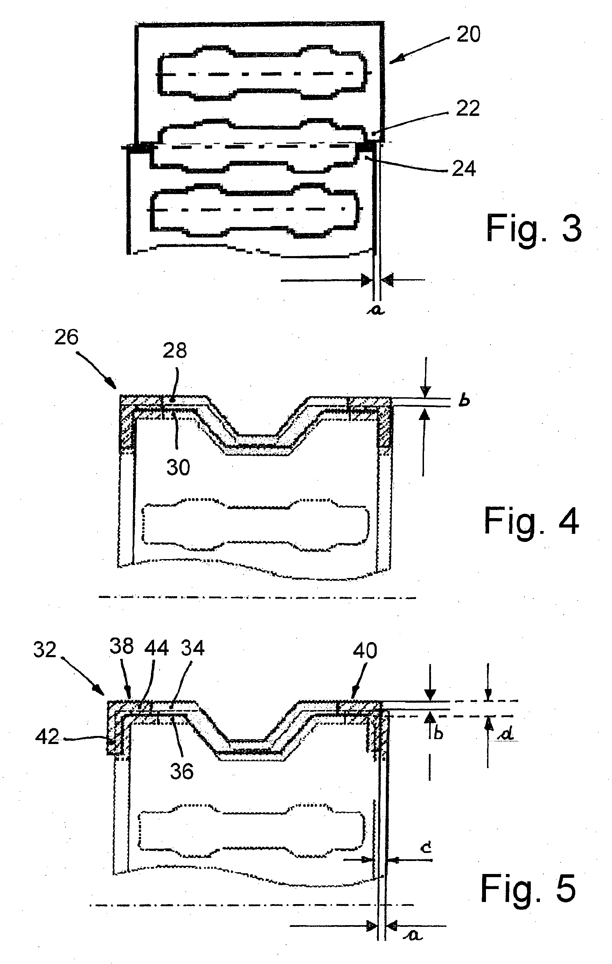

Figur 3 zeigt einen Wälzkörperkäfig 20 etwa gemäß der Figur 2, wobei jedoch die Bandabschnittsenden 22, 24 mit einem axialen Versatz a (bezogen auf die Richtung der Lagerlängsachse) miteinander verbunden sind.

Figur 4 zeigt in einem Profillängsschnitt einen Wälzkörperkäfig 26, bei welchem die Bandabschnittsenden 28, 30 mit einem radialen Versatz b miteinander verbunden sind.

Figur 5 zeigt einen Wälzkörperkäfig 32 etwa gemäß der Figur 4, wobei die Bandabschnittsenden 34, 36 mit einem axialen Versatz a und einem radialen Versatz b miteinander verbunden sind.

Das Längsschnittprofil der Wälzkörperkäfige 26 und 32 ist wie bei der Figur 1 im Wesentlichen M-förmig. Die die Wälzkörpertaschen 18 axial begrenzenden Borde 38 und 40 (siehe Figur 5) weisen jeweils einen rechtwinklig radial nach innen abgebogenen, flanschartigen Bordabschnitt 42 und einen in einer Mantelfläche des Käfigs liegenden Bordabschnitt 44 auf. Um sicherzustellen, dass die trotz des Versatzes sich noch überlappenden Stirnflächen der Bandabschnittsenden 34, 36 für eine sichere Schweißverbindung ausreichen, soll der axiale Versatz a höchstens gleich der Hälfte der axialen Dicke c des Bordabschnittes 42 und der radiale Versatz b höchstens gleich der Hälfte der radialen Dicke d des Bordabschnittes 44 sein.

Es sei hier nochmals bemerkt, dass die Käfige jeweils aus einem einzigen, kreisförmig gebogenen Bandabschnitt bestehen können, dessen beide Enden miteinander verbunden sind oder, wie hier nicht im einzelnen dargestellt, aus mehreren kreissegmentförmigen Bandabschnitten bestehen können, die über ihre Bandabschnittsenden zu einem kreisförmigen Käfig verbunden sind.

### Bezugszeichenliste

- 2: Wälzkörperkäfig
- 4: Wälzkörper
- 6: Äußerer Lagerring
- 8: Welle
- 10: Wälzkörperkäfig
- 12: Metallbandabschnitt
- 14: Bandabschnittsende
- 16: Bandabschnittsende
- 18: Wälzkörpertasche
- 20: Wälzkörperkäfig
- 22: Bandabschnittsende
- 24: Bandabschnittsende
- 26: Wälzkörperkäfig
- 28: Bandabschnittsende
- 30: Bandabschnittsende
- 32: Wälzkörperkäfig
- 34: Bandabschnittsende
- 36: Bandabschnittsende
- 38: Bord
- 40: Bord
- 42: Bordabschnitt
- 44: Bordabschnitt
- a: Axialer Versatz
- b: Radialer Versatz
- c: Dicke von 42
- d: Dicke von 44

## Patentansprüche

1. Wälzkörperkäfig aus einem profilierten, gestanzten, abgelängten und rundgebogenen Metallbandmaterial, wobei die Enden der abgelängten Bandabschnitte durch Schweißen miteinander verbunden sind, **dadurch gekennzeichnet, dass** die Bandabschnittsenden (28, 30; 34, 36) einen vorgegebenen axialen Versatz (a) und/oder radialen Versatz (b) zueinander aufweisen.

2. Wälzkörperkäfig nach Anspruch 1, wobei der Käfig wenigstens einen im wesentlichen rechtwinklig radial nach innen abgebogenen Bordabschnitt aufweiset, **dadurch gekennzeichnet, dass** ein axialer Versatz (a) höchstens gleich der Hälfte der axialen Dicke (c) des Bordabschnittes (42) ist.

3. Wälzkörperkäfig nach Anspruch 1 oder 2, mit wenigstens einem in einer Mantelfläche des Käfigs liegenden Bordabschnitt, **dadurch gekennzeichnet, dass** ein radialer Versatz (b) höchstens gleich der Hälfte der radialen Dicke (d) des Bordabschnittes (44) ist.

4. Wälzkörperkäfig nach einem der Ansprüche 1 bis 3, **dadurch gekennzeichnet, dass** der Wälzkörperkäfig (20) aus einem einzigen kreisförmig gebogenen Bandabschnitt besteht, dessen beide Bandabschnittsenden (22, 24) miteinander verbunden sind.

5. Wälzkörperkäfig nach einem der Ansprüche 1 bis 3, **dadurch gekennzeichnet, dass** der Wälzkörperkäfig aus mehreren kreissegmentförmigen Bandabschnitten besteht, die über ihre Bandabschnittsenden zu einem kreisförmigen Käfig verbunden sind.

## Claims

1. Rolling-body cage made from a metal strip material which is profiled, punched, cut to length and bent around, the ends of the cut-to-length strip sections being connected to one another by way of welding, **characterized in that** the strip section ends (28, 30; 34, 36) have a predefined axial offset (a) and/or radial offset (b) with respect to one another.

2. Rolling-body cage according to Claim 1, the cage having at least one rim section which is bent away radially inwards substantially at a right angle, **characterized in that** an axial offset (a) is at most equal to half the axial thickness (c) of the rim section (42).

3. Rolling-body cage according to Claim 1 or 2, having at least one rim section which lies in a circumferential face of the cage, **characterized in that** a radial offset (b) is at most equal to half the radial thickness (d) of the rim section (44).

4. Rolling-body cage according to one of Claims 1 to 3, **characterized in that** the rolling-body cage (20) consists of a single strip section which is bent in a circular shape and the two strip section ends (22, 24) of which are connected to one another.

5. Rolling-body cage according to one of Claims 1 to 3, **characterized in that** the rolling-body cage consists of a plurality of circular segment-shaped strip sections which are connected via their strip section ends to form a circular cage.

## Revendications

1. Cage de corps de roulement, constituée d'un matériau en bande métallique profilé, estampé, coupé à longueur et cintré sous forme ronde, les extrémités des portions de bande coupées à longueur étant connectées les unes aux autres par soudage, **caractérisée en ce que** les extrémités de portions de bande (28, 30 ; 34, 36) présentent un décalage axial prédéfini (a) et/ou un décalage radial prédéfini (b) les unes par rapport aux autres.

2. Cage de corps de roulement selon la revendication 1, la cage présentant au moins une portion de bord cintrée radialement vers l'intérieur essentiellement à angle droit, **caractérisée en ce qu'**un décalage axial (a) est au maximum égal à la moitié de l'épaisseur axiale (c) de la portion de bord (42).

3. Cage de corps de roulement selon la revendication 1 ou 2, comprenant au moins une portion de bord située dans une surface d'enveloppe de la cage, **caractérisée en ce qu'**un décalage radial (b) est au maximum égal à la moitié de l'épaisseur radiale (d) de la portion de bord (44).

4. Cage de corps de roulement selon l'une quelconque des revendications 1 à 3, **caractérisée en ce que** la cage de corps de roulement (20) se compose d'une portion de bande unique cintrée sous forme circulaire dont les deux extrémités de portion de bande (22, 24) sont connectées l'une à l'autre.

5. Cage de corps de roulement selon l'une quelconque des revendications 1 à 3, **caractérisée en ce que** la cage de corps de roulement se compose de plusieurs portions de bande en forme de segments circulaires qui sont connectées par le biais de leurs extrémités de portions de bande pour former une cage de forme circulaire.
